(19) Europäisches Patentamt
European Patent Office
Office européen des brevets

(11) **EP 2 737 109 B1**

(12) **EUROPEAN PATENT SPECIFICATION**

(45) Date of publication and mention
of the grant of the patent:
**30.11.2022 Bulletin 2022/48**

(21) Application number: **12820379.1**

(22) Date of filing: **27.07.2012**

(51) International Patent Classification (IPC):
**C23F 11/00** *(2006.01)*

(52) Cooperative Patent Classification (CPC):
**C02F 5/10; C22B 3/04;** C02F 2103/10; Y02P 10/20

(86) International application number:
**PCT/US2012/048568**

(87) International publication number:
**WO 2013/019627 (07.02.2013 Gazette 2013/06)**

(54) **SCALE-INHIBITING POLYMERS AND METHODS FOR PREVENTING SCALE FORMATION**

KESSELSTEINHEMMENDE POLYMERE UND VERFAHREN ZUR VERHINDERUNG VON KESSELSTEINBILDUNG

POLYMÈRES ANTI-TARTRE ET PROCÉDÉS PERMETTANT D'EMPÊCHER LA FORMATION DE TARTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2011 US 201161513092 P**

(43) Date of publication of application:
**04.06.2014 Bulletin 2014/23**

(73) Proprietor: **Kemira OYJ**
**00180 Helsinki (FI)**

(72) Inventors:
• **DICKINSON, Wayne**
**Atlanta, GA 30305 (US)**
• **MOORE, Lucas**
**Marietta, GA 30067 (US)**

(74) Representative: **Carpmaels & Ransford LLP**
**One Southampton Row**
**London WC1B 5HA (GB)**

(56) References cited:
EP-A1- 0 564 248    EP-A1- 0 792 998
WO-A1-00/66810    WO-A1-02/079106
WO-A1-2012/065129    US-A- 3 879 288
US-A- 5 000 856    US-A- 5 181 567
US-A- 5 215 574    US-A- 5 320 757
US-A- 5 358 642    US-A- 5 368 830
US-A- 5 454 954    US-A- 5 833 937
US-A- 6 022 401    US-A1- 2003 132 166
US-A1- 2006 191 852    US-A1- 2007 267 193
US-A1- 2009 048 142    US-B2- 6 620 338
US-B2- 7 767 111

**Description**

**CROSS REFERENCE TO RELATED APPLICATION**

This application claims priority to U.S. Provisional Patent Application No. 61/513,092, filed July 29, 2011.

**FIELD OF THE ART**

The present invention relates to methods for scale prevention comprising adding scale-inhibiting polymers or compositions comprising scale-inhibiting polymers and a solvent to fluids.

**BACKGROUND**

Modern methods of mining for metals such as gold and silver require separation and enrichment of the metal from the metal-containing ore. Methods for separation and enrichment include, for example: gravity separation, flotation, leach process, refractory ore processing, alternative lixiviants, amalgamation, etc. Many of these techniques involve the use of external chemistries to extract or separate the metal from the ore.

Common gold (or other precious metal) extraction methods use what is known as "heap leaching" or "vat leaching" to extract the metal from of the raw ore. Both methods involve dissolving the gold in a lixiviant, which is typically an aqueous solution of alkaline cyanide, such as, for example, sodium cyanide. The cyanide solution is generally maintained at an alkaline pH to prevent release of toxic hydrogen cyanide. Under these conditions, the cyanide ions will coordinate to the gold, forming a complex that is soluble in the aqueous media. The solution containing the metal complex (called a "pregnant solution") may then be processed through various precious metal recovery systems.

Scale or mineral deposit formation is a common problem with many mining methods, as scale or mineral deposits may form at any of numerous points in the process.

BRIEF SUMMARY

The invention is defined by the appended claims. In particular, the invention provides a method for preventing scale formation in circulating fluid, wherein the method comprises adding a scale-inhibiting polymer or a composition comprising a scale-inhibiting polymers and a solvent, to a fluid, wherein the scale-inhibiting polymer comprises two or more recurring units, wherein at least one recurring unit is a sulfonate-containing monomer and at least one recurring unit is maleic acid, wherein the sulfonate-containing monomer is selected from 2-sulfoethyl methacrylate and salts thereof; and wherein the fluid is an aqueous alkali cyanide solution.

The disclosure may be understood more readily by reference to the following detailed description of the various features of the disclosure and the examples included therein.

**BRIEF DESCRIPTION OF THE DRAWINGS**

Figure 1 shows a schematic of a heap process for metal recovery.
Figure 2 shows a schematic of a carbon-in-leach process for metal recovery from carbonate rich ore.
Figure 3 shows a schematic of a carbon-in-leach process for metal recovery from sulfide rich ore.
Figure 4 shows a carbon column test circuit to determine calcium carbonate inhibition, according to the examples.
Figure 5 shows a light sensor response of a sample treated with an antiscalant composition according to an exemplary embodiment.

**DETAILED DESCRIPTION**

The exemplary embodiments described herein provide methods for preventing scale formation in circulating fluid using scale-inhibiting polymers and compositions comprising the scale-inhibiting polymers. The methods described herein may be used to provide efficient and economical scale inhibition in mining processes or to prevent the formation or accumulation of mineral scale during metal extraction from mineral ores.

As used herein, the terms "polymer," "polymers," "polymeric," and similar terms are used in their ordinary sense as understood by one skilled in the art, and thus may be used herein to refer to or describe a large molecule (or group of such molecules) that contains recurring units. Polymers may be formed in various ways, including by polymerizing monomers and/or by chemically modifying one or more recurring units of a precursor polymer. A "homopolymer" is a polymer comprising substantially identical recurring units formed by, e.g., polymerizing a particular monomer. A polymer may be a "copolymer" comprising two or more different recurring units formed by, e.g., copolymerizing two or more different monomers, and/or by chemically modifying one or more recurring units of a precursor polymer. The term "terpolymer" may be used herein to refer to polymers containing three or more different recurring units.

The term "antiscalant", "scale-inhibiting polymer" or "scale-inhibiting polymer" generally refers to chemicals that are applied at substoichiometric levels to interfere with crystal nucleation, growth, and agglomeration. As used herein, the terms "antiscalant," "antiscalants," "antiscale agent," "scale-inhibiting polymer" and similar terms are used in their ordinary sense as understood by one skilled in the art, and thus may be use herein to refer to or describe chemical compounds or compositions containing such compounds, where the compounds, when added to an aqueous system that tend to form scale, reduce or inhibit the formation, deposition and adherence of scale deposits on substrate surfaces in contact with scale-forming aqueous system. The scale-inhibitor may be used to reduce or inhibit the formation of scale (for example, the total amount and/or rate of formation of scale) in the aqueous system, as compared to a system that does not contain the added chemical compound or composition. In exemplary embodiments, the scale-inhibiting polymer may be added to an aqueous solution, that may contain metal ions, such as ions of calcium, barium, magnesium, aluminum, strontium, iron, etc. and anions such as bicarbonate, carbonate, oxalate, sulfate, phosphate, silicate, fluoride, etc., that are likely to cause scale or mineral deposits.

As used herein, the term "scale" or "mineral scale" refers to insoluble substances such as insoluble salts, that have a tendency to form in aqueous systems such as boiler water, cooling water, seawater (e.g. in oil platform applications), brackish water, oilfield water, municipal treatment plant water, paper mill water, mining water, and industrial treatment plant water. In particular, "scale" includes inorganic salts are typically formed by the reaction of metal cations such as calcium, magnesium or barium with inorganic anions, such as phosphate, carbonate and sulfate. Such salts are typically insoluble or have low solubility in water.

The terms "preventing scale" or "treatment of scale" will be understood by those skilled in the art to have a broad and customary meaning that includes using the scale-inhibiting polymers and/or compositions to reduce, control or inhibit the amount of scale and/or reduce the rate of formation of scale in various aqueous systems, as compared to comparable aqueous systems that do not contain the scale-inhibiting polymers and/or compositions.

POLYMERS

The scale-inhibiting polymer for use in the method of the invention comprises two or more recurring units wherein at least one recurring unit is a sulfonate-containing monomer selected from 2-sulfoethyl methacrylate and salts thereof, and at least one recurring unit is maleic acid.

In exemplary embodiments, the polymer is a copolymer. In exemplary embodiments, the polymer is a terpolymer.

In exemplary embodiments, the polymer comprises three or more recurring units wherein at least one recurring unit is a sulfonate-containing monomer selected from 2-sulfoethyl methacrylate and salts thereof; one recurring unit is maleic acid, and at least one recurring unit is selected from the group consisting of itaconic acid, acrylamide, acrylic acid, methacrylic acid, polyethylene glycol monomethacrylate, maleic anhydride, t-butyl acrylamide, hydroxy propyl acrylate, hydroxy ethyl methacrylate, hydroxy propyl methacrylate, and vinyl phosphonic acid.

The sulfonate-containing monomer is 2-sulfoethyl methacrylate (2-SEM) and salts thereof. Exemplary salts include lithium, sodium, potassium and ammonium salts.

One recurring unit in the polymer is maleic acid. In exemplary embodiments, one recurring unit in the polymer is itaconic acid. In exemplary embodiments, one recurring unit in the polymer is acrylamide. In exemplary embodiments, one recurring unit in the polymer is acrylic acid. In exemplary embodiments, one recurring unit in the polymer is methacrylic acid. In exemplary embodiments, one recurring unit in the polymer is polyethylene glycol monomethacrylate. In exemplary embodiments, one recurring unit in the polymer is maleic anhydride. In exemplary embodiments, one recurring unit in the polymer is t-butyl acrylamide. In exemplary embodiments, one recurring unit in the polymer is hydroxy propyl acrylate. In exemplary embodiments, one recurring unit in the polymer is hydroxy ethyl methacrylate. In exemplary embodiments, one recurring unit in the polymer is hydroxy propyl methacrylate. In exemplary embodiments, one recurring unit in the polymer is vinyl phosphonic acid.

In exemplary embodiments, the polymer is a copolymer of a sulfonate-containing monomer selected from 2-sulfoethyl methacrylate and salts thereof and maleic acid.

In exemplary embodiments, the polymer is a terpolymer comprising recurring units of each of a sulfonate-containing monomer selected from 2-sulfoethyl methacrylate and salts thereof, maleic acid and a recurring unit selected from the group consisting of itaconic acid, acrylamide, acrylic acid, methacrylic acid, polyethylene glycol monomethacrylate, maleic anhydride, t-butyl acrylamide, hydroxy propyl acrylate, hydroxy ethyl methacrylate, hydroxy propyl methacrylate, and vinyl phosphonic acid. For example, a terpolymer of a sulfonate-containing monomer, maleic acid and acrylic acid.

In exemplary embodiments, the scale-inhibiting polymer has the molecular weight of about 1,000 to about 30,000 Daltons, or from about 1,000 to about 12,000 Daltons.

Any of the recurring units described in the embodiments herein may comprise about 1% to about 90%, about 1% to about 80%, about 1% to about 70%, about 5% to about 60%, about 5% to about 50%, about 5% to about 40%, about 5% to about 30%, or about 5 to about 20% by mole of the polymer. In exemplary embodiments, any recurring unit described herein comprises up to about 90%, about 80%, about 70%, about 60%, about 50%, about 40%, about 30%, about 20%, about 15%, or about 10% by mole of the polymer.

In exemplary embodiments, the sulfonate-containing monomer comprises about 1% to about 90%, about 1% to about 80%, about 1% to about 70%, about 5% to about 60%, about 5% to about 50%, about 5% to about 40%, about 5% to about 30%, or about 5 to about 20% by mole of the polymer. In exemplary embodiments, the sulfonate-containing monomer comprises up to about 90%, about 80%, about 70%, about 60%, about 50%, about 40%, about 30%, about 20%, about 15%, or about 10% by mole of the polymer.

In certain embodiments, the polymer is a copolymer and the sulfonate-containing monomer comprises less than 50% by mole of the polymer. In certain embodiments, the polymer is a terpolymer and the sulfonate-containing monomer comprises less than 30% by mole of the polymer. In certain embodiments, the polymer is a terpolymer, the sulfonate-containing monomer comprises less than 30%, and each of the other two recurring units comprises about 30% to about 60% by mole of the polymer.

In exemplary embodiments where the polymer is a copolymer, the molar ratio of maleic acid to sulfonate-containing monomer is in the range of from about 1:99 to about 99:1, from about 30:70 to about 70:30, about 60:40 to about 40:60, or about 55:45 to about 45:55. In exemplary embodiments, the molar ratio of maleic acid to sulfonate-containing monomer is about 1:99, about 30:70, about 40:60, about 45:55, about 50:50, about 55:45, about 60:40, about 70:30, or about 99:1.

The polymer comprises one type of sulfonate-containing monomer selected from 2-sulfoethyl methacrylate and salts thereof. In certain embodiments, the polymer comprises two types of sulfonate-containing monomers, wherein at least one of the sulfonate-containing monomers is 2-sulfoethyl methacrylate or a salt thereof. In certain embodiments, the polymer comprises three or more types of sulfonate-containing monomers, wherein at least one of the sulfonate-containing monomers is 2-sulfoethyl methacrylate or a salt thereof.

In exemplary embodiments, the polymer may contain one or more additional monomer(s) or recurring units. Any suitable monomers may be used, as necessary or desired. Exemplary additional monomers include the following any monomer that does not adversely impact the scale-inhibiting properties of the polymer or that is know in the art of scale-inhibiting polymers.

In certain embodiments, maleic acid is prepared from maleic anhydride and water.

In exemplary embodiments, the synthesis of the polymeric scale-inhibiting polymer can be carried out by any suitable polymerization reaction which is known in the art, or later developed.

An exemplary polymerization reaction can be initiated by any suitable means which results in generation of a suitable free-radical. In the radical polymerization technique the source of free radicals can be from any suitable method of generating free radicals such as thermally induced method, redox initiating method, photochemical initiating method or high energy radiation such as electron beam, X or gamma ray radiation. An exemplary method of generating free radicals is thermally induced method.

In the radical polymerization typical thermal initiators include azo compounds, peroxides or peroxyesters. The polymerization initiators are not limited to any particular species but may be any of the conventional initiators, inclusive redox initiators, azo initiators and peroxides. In an exemplary embodiment, the polymerization initiator is an azo initiator. Exemplary azo initiators include, among others, azonitrile compounds such as 2,2'-azobis(2-methylpropionitrile) (AIBN), azobisdimethylvaleronitrile and azobisdimethylmethoxyvaleronitrile; azoamidine compounds such as 2,2'-azobis(methylpropionamidine)dihydrochloride (V-50), VA-041, VA-044 and VA-061 (V-50, VA-041, VA-044 and VA-061 are products of Wako Pure Chemical Industries , Ltd.); azoamide compounds such as VA-080, VA-086 and VA-088 (products of Wako Pure Chemical Industries, Ltd.); azoalkyl compounds such as azodi-tert-octane and azoditert-butane; cyanopropylazo-formamide, 4,4'-azobis(cyanovaleric acid), 4,4'-azobis-(cyanopentanoic acid) dimethylazobismethyl propionate, azobishydroxymethyl-propionitrile and the like. In an exemplary embodiment, the initiator is 2,2'-azobis-(methylpropionamidine)dihydrochlohde (V-50), or 4,4'- azobis(cyanopentanoic acid) or 4,4'-azobis(cyanovaleric acid).

In an exemplary embodiment, a radical polymerization initiator may be used alone, or two or more thereof may be used as a mixture.

In an exemplary embodiment, the molar ratio of the radical polymerization initiator to the monomer may be from about 0.0001 to about 0.1, such as from about 0.0005 to about 0.05, or from about 0.0005 to about 0.01.

COMPOSITIONS

A composition comprising a scale-inhibiting polymer and a solvent is also provided for use in the method of the invention, wherein the polymer comprises two or more recurring units wherein at least one recurring unit is a sulfonate-containing monomer selected from 2-sulfoethyl methacrylate and salts thereof and at least one recurring unit is maleic acid. In exemplary embodiments, the solvent is water or an aqueous solution, for example a solution of water and other solvents wherein water is greater than 40% of the aqueous solution by weight or volume. In certain embodiments, the solvent may be a system or blend of solvents, for example water and alkylamine solvent.

The scale-inhibiting polymer or composition for use in the method of the invention may be provided in any suitable form as necessary or desired, including solid or liquid form. In an exemplary embodiment, the scale-inhibiting polymer may be provided in an aqueous solution in which about 25 to about 60% (by weight) of the solution, or composition, is the polymer. In exemplary embodiments, the solution or composition may have a pH of from about 1 to about 8.

As referred to herein, the phrase "effective scale-inhibiting amount" means an amount of a scale-inhibiting polymer or a scale-inhibiting composition to provide suitable scale inhibition, removal or reduction. In exemplary embodiments, the scale-inhibiting composition may include an effective scale-inhibiting amount of a scale-inhibiting polymer as described herein. Exemplary scale-inhibiting compositions may, for example, contain from about 5 to about 95% by weight of a scale-inhibiting polymer.

In certain embodiments, the scale-inhibiting composition may consist essentially of the scale-inhibiting polymer.

In exemplary embodiments, the scale-inhibiting composition is a liquid. In exemplary embodiments, the scale-inhibiting composition comprises water or a water-based fluid, for example a seawater-based fluids, but other fluids are not excluded. In other embodiments, the scale-inhibiting composition comprises a solvent that is not water, for example, a glycol or a glycol ether-based solvent.

In exemplary embodiments, the scale-inhibiting composition comprises one or more additional additives or water treatment agents. Representative, non-limiting additional additives or agents include: other scale-inhibiting polymers or agents, salts, oils, colorants, flow modifiers, surfactants, such as anionic surfactants (e.g. C10-20 alkyl benzene sulfonates, C10-20 olefin sulfonates, C10-20 alkyl sulfates, C10-20 alkyl 1 to 25 mole ether sulfates, C10-20 parafin sulfonates, C10-20 soaps, C10-20 alkyl phenol sulfates, sulfosuccinates, sulfosuccinamates, lignin sulfonates, fatty ester sulfonates, C10-20 alkyl phenyl ether sulfates, C10-20 alkyl ethanolamide sulfates, C10-20 alpha sulfo fatty acid salts, C10-20 acyl sarcosinates, isethionates, C10-20 acyl taurides, C10-20 alkyl hydrogen phosphates), nonionic surfactants (e.g. ethoxylated and/or propoxylated C10-20 alcohols, ethoxylated and/or propoxylated C 10-20 carboxylic acids, alkanolamides, amine oxides, and/or C 10-20 acyl sorbitan and/or glyceryl ethoxylates) amphoteric surfactants (e.g. betaines, sulfobetaines, and/or quaterised imidazolines), and/or cationic surfactants (e.g. benzalkonium salts, C10-20 alkyl trimethyl ammonium salts, and/or C 10-20 alkyl trimethyl); sequestrants, chelating agents, corrosion inhibitors (e.g., imidazoline and quaterantry ammonium salts); and/or other threshold agents (e.g. polymers such as aminometholine phosphonate polymers, polyacrylic acid, or non polymeric agents such as sodium tripolyphosphate, sodium ethylenediamine tetracetate, sodium nitrilo triacetate, tetra potassium pyrophosphate, acetodiphosphonic acid and its salts, ammonium trismethylene phosphonic acid and its salts, ethylenediamine tetrakis (methylene phosphonic) acid and its salts, diethylenetriamine pentakis (methylene phosphonic) acid and its salts); tolyltriazole and mixtures of nitrate, benzqate, HHP and/or PTCB); hydrate inhibitors (e.g., methanol); cinetic inhibitors such as anti-agglomeration agents; biocides (e.g. tetrakis (hydroxymethyl) phosphonium salts, formaldehyde, glutaraldehyde, DENPA, bromopol isothiazoronal); oxidizing biocides and/or bleaches (e.g. chlorine, chlorine dioxide, hydrogen peroxide, sodium perborate); foam controlling agents such as silicone antifoams; oxygen scavengers such as hydrazines and/or hydroxylamines; pH controlling and/or buffering agents such as amines, borates, citrates and/or acetates; chromium salts; zinc salts; asphaltene inhibitors; wax inhibitors; demulsifiers; other scale inhibitors; and/or other water treatment agents such as polymeric dispersants and coagulants including polymaleic, polyacrylic and polyvinylsulfonic acids and their salts, starches and/or carboxy methyl cellulose, and/or molybdates.

In exemplary embodiments, the scale-inhibiting composition may include from about 5 to about 95% by weight of the scale-inhibiting polymer and from about 5 to about 90% by weight of one or more of any of the aforesaid additives or water treatment agents.

In an exemplary water-based or aqueous scale-inhibiting composition, the scale-inhibiting polymer may be combined with the water using any suitable method. For example, the scale-inhibiting polymer may be dissolved, suspended, dispersed or emulsified in the water. The amount of water in the aqueous scale-inhibiting composition may vary, as necessary or desired. For example an aqueous scale-inhibiting composition may comprise about 20% to about 80% scale-inhibiting polymer, based on the total weight of the aqueous scale-inhibiting composition.

The performance or efficacy of scale-inhibiting compositions can be evaluated using any known methods for antiscalant or scale inhibitor performance testing, including but not limited to: static antiprecipitation (jar tests), crystal growth kinetics, rotation tests and dynamic scale inhibition tests, for example dynamic tube blocking test, stirred vessel test, and rotating spindle test.

METHODS

The present invention provides a method for preventing scale formation in circulating fluid, wherein the method comprises adding a scale-inhibiting polymer, or a composition comprising the scale-inhibiting polymer to the fluid; wherein the scale-inhibiting polymer and composition are as described herein and wherein the fluid is an aqueous alkali cyanide solution. In exemplary embodiments, the circulating fluid is utilized in, or is a component of, a mining process, or is in a system that is utilized in a mining process.

In exemplary embodiments, a method for preventing scale formation in a mining process is provided, wherein the method comprises adding a scale-inhibiting polymer, or a composition comprising the scale-inhibiting polymer to a fluid utilized in the mining process; wherein the scale-inhibiting polymer and composition are as described herein.

In exemplary embodiments, the scale-inhibiting polymer may be added to a fluid, for example an aqueous solution, that may contain metal ions, such as ions of calcium, barium, magnesium, aluminum, strontium, iron, etc. and anions such as bicarbonate, carbonate, oxalate, sulfate, phosphate, silicate, fluoride, etc., that are likely to cause scale or mineral deposits. In certain embodiments, the fluid is an aqueous alkali cyanide solution. In an exemplary embodiment, the scale-inhibiting polymer may be added to an alkali cyanide solution, such as sodium cyanide solution. In an exemplary method, the inhibitor is dosed as a liquid, such an aqueous liquid.

In exemplary embodiments, the dosing of the scale-inhibiting polymer to the aqueous solution or fluid may be from about 1 to about 5000 ppm. In some embodiments the dosing may be up to about 1000 ppm, or up to about 100 ppm. In an exemplary embodiment, the dosage is about 30 ppm. In exemplary embodiments, the dosing of the scale-inhibiting polymer to the process will produce any necessary or desired reduction in scale or mineral deposition in the process. The effectiveness of the scale-inhibiting polymer may be measured, for example, by measuring and comparing the amount of scaling mineral that is dissolved in the solution to which the scale-inhibiting polymer is added. In an exemplary embodiment, the scale-inhibiting polymer may have a "minimum inhibitory concentration" (MIC), below which the scale-inhibiting polymer is ineffective to reduce or prevent scale or mineral deposition.

The scale-inhibiting polymer or composition may be added directly to the desired fluid to be treated in a fixed quantity or can be added continuously or intermittently t the fluid as necessary or desired.

In an exemplary embodiment, the mining process is a metal extraction process from raw mineral ore. The metal may include any valuable metal, such as gold, silver, mercury and copper, as well as a diverse range of transition metals including iron, nickel, cobalt, vanadium, and titanium, and metals such as zinc, cadmium, tin, molybdenum, zirconium and the like. In one embodiment, the metal comprises gold, silver, mercury, nickel or copper.

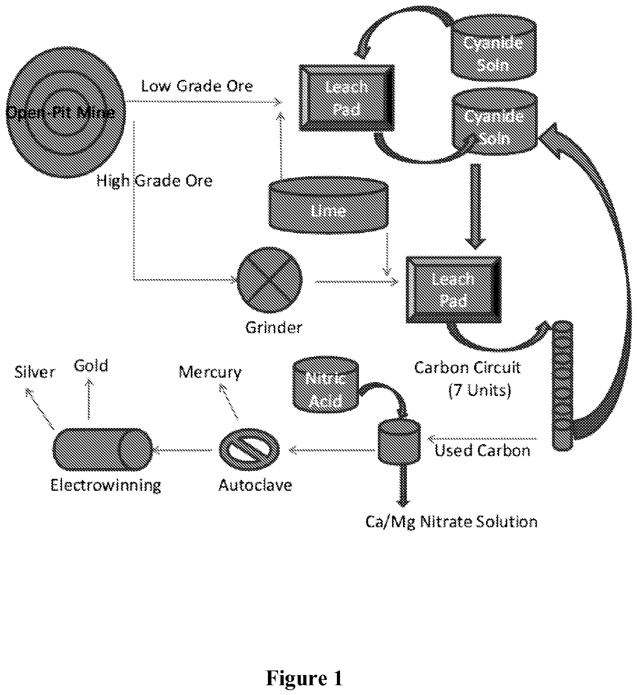

The methods described herein may be used in various mining methods or processes. For example, the methods may be used in a heap leaching process. A typical heap leaching process involves mining and then crushing the ore (see Figure 1). The crushed ore is stacked in a mound (a "heap") over an impermeable liner. The ore may be blended with lime to maintain an alkaline pH while the cyanide solution is in use. The heap is irrigated with a leach solution (aqueous cyanide solution), such as for example, with hoses or sprinklers that spray the solution on the surface of the heap over a period of time (e.g. about 60 to 90 days). The cyanide solution dissolves the metals and migrates (percolates) through the ore heap until it contacts the impermeable liner below, which is sloped in one direction. The "pregnant" solution containing the dissolved metals moves down this slope and is collected for recovery of the gold from the solution. In a typical vat leaching process, the ore and leach solution are combined in an indoor vat, rather than a heap. The vat leaching process is typically practiced in regions in which the environmental conditions are unfavorable to year-round operation of a heap-type leaching process.

The methods described herein may be used in a methods for recovering metal involving adsorption of the metal onto an activated carbon source. A conventional method for recovering the precious metal from a pregnant solution involves adsorption of the metal onto an activated carbon source, such as coconut shell carbon. Activated carbons can adsorb up to about 30,000 ppm of gold in a cyanide complex. One simple method for adsorption is to introduce the pregnant solution from the leaching process to a series of columns or drums that contain activated carbon. For example, the solution may be forced up from the bottom of each column through the carbon, where the gold is adsorbed onto the surface of the carbon. The solution may flow through a series of these circuits until substantially all of the gold is collected on the carbon. The carbon, with adsorbed gold, may be purified and separated from the other materials, and the gold may later be removed (stripped, desorbed) from the carbon. The remaining solution may be further treated and recycled to the process.

The methods described herein may be used in metal extraction processes combine leaching and activated carbon recovery operations, for example, in a conventional carbon-in-pulp (CIP) process or a carbon-in-leach (CIL) process.

In a CIP process, the ore ("pulp") is finely ground and leached (using a cyanide solution) in a series of agitated leaching tanks to dissolve the gold. Instead of separating the solids from the pregnant solution, the entire slurry flows to a series of tanks in circuit where the slurry is contacted with activated carbon (that is coarser than the ore particle). The carbon adsorbs the gold from the slurry solution, and is removed from the slurry by coarse screening. The gold may then be removed from the carbon.

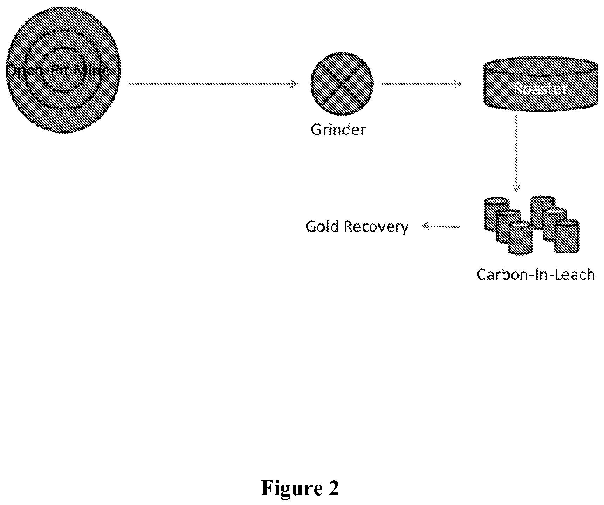

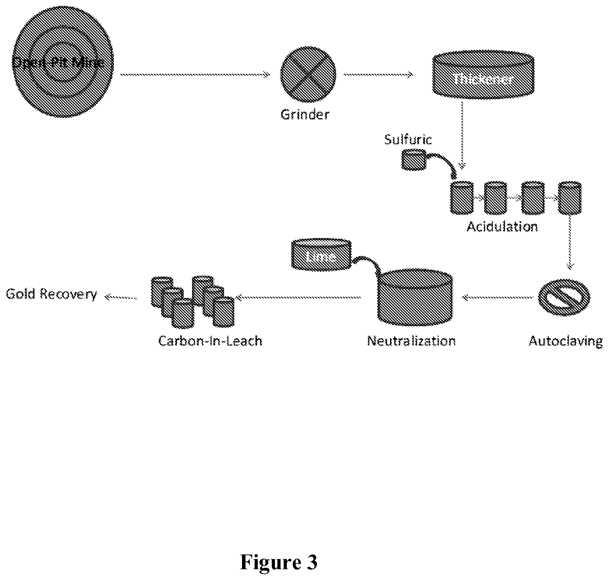

A typical CIL process integrates the leaching and adsorption steps into a single process. For example, the leaching tanks are fitted with carbon retention screens. Carbon is directly added to the leach so that the gold is adsorbed onto carbon almost as soon as it is dissolved by the cyanide solution. For the CIL process, it may be necessary or desirous to pretreat the ore prior to processing. For example, referring to Figure 2, for carbonate rich ore, the carbon in the ore may first be reduced so that it will not compete for the gold coordination in the CIL circuit. This is done by burning the majority of the carbon in a roaster. The roasting step is conducted at a temperature that will eliminate the carbon without affecting the metals present. If the ore is rich in sulfides then in the pretreatment step the ore will be autoclaved to oxidize the sulfide ore (see Figure 3), reducing its coordination to gold, providing more vacant coordination sites for the cyanide ions. Oxidation also makes the sulfur component more water soluble, which can prevent it from blocking the carbon circuit.

Scale or mineral deposit formation can cause problems with mining process, including those described above. Scale or mineral deposits form when an ionic material in solution reaches its saturation point and begins to precipitate and adhere to a surface. Scale or mineral deposit formation may be worsened by the use of high pH solutions.

Scale or mineral deposits may form at any of numerous points in the process. For example, in the heap leaching process or vat leaching process, scale deposits may form at the sprinkler nozzle, or in other fluid handling equipment in contact with the leaching solution and/or pregnant solution. In the activated carbon recovery process, scale formation can block or occlude the carbon, decreasing the gold adsorption efficiency. In CIL and CIP processes, the various parts of the system involved in leaching and adsorption are subject to the formation of troublesome mineral deposits.

Scale or mineral deposits may also form downstream of these processes. For example, some mining processes include downstream treatment of tailings or waste streams. In some processes, the tailings or waste streams are transported through a pipe to a thickener or clarifier process, where the liquid and solid components are further separated, producing a liquid (overflow) stream and a solids stream. In some processes, flocculants may be added to the tailings or waste stream to enhance separation of the solid material. In some processes, lime may be added to the tailings or waste stream prior to feeding to the thickener to increase the pH, and/or precipitate the solids. In some processes, the resulting liquid (overflow) stream may be further treated with a filter, such as a leaf filter. Scale or mineral deposits may form in various portions of these processes, including the transport pipe, the thickener, the filter, and/or other related process components.

The scale or mineral deposits can build up over time and eventually lead to potentially expensive problems, such as: loss in heat transfer efficiency, flow restrictions and plugging, under-deposit corrosion, equipment damage and failure.

In exemplary embodiments, the methods described herein can be used to prevent scale formation in a mining process, including the mining processes described herein. In exemplary embodiments, the mining process is a process selected from the group consisting of: heap leaching, vat leaching, activated carbon recovery, carbon adsorption, carbon-in-pulp (CIP), and carbon-in-leach (CIL), or combinations or portions thereof.

In exemplary embodiments, the scale-inhibiting polymer may be added to the mining process at any step or portion of the process, as necessary or desired. For example, the scale-inhibiting polymer may be added to one or more portions or steps of the process where it is likely to reduce scale or mineral deposits in that portion or step of the process, or downstream therefrom. In some embodiments, the scale-inhibiting polymer may be added to a leach solution before it is combined with the ore. In some embodiments the scale-inhibiting polymer may be added to a leach solution, slurry, or heap during or after the leaching step. In some embodiments, the scale-inhibiting polymer may be added to a leached metal solution or slurry before, during or after the activated carbon recovery process. In processes in which the leaching and carbon recovery processes are combined, the scale-inhibiting polymer may be added to any portion or step of the process where necessary or desired. It will be understood that any one or combination of these application methods may be used in the embodiments. In one embodiment, the mining process comprises a leaching step and the scale-inhibiting polymer is added to the process before or during the leaching step. In one embodiment, the mining process comprises a carbon adsorption step and the scale-inhibiting polymer is added to the process before or during the carbon adsorption step.

The following examples are presented for illustrative purposes only, and are not intended to limit the scope of the invention.

## EXAMPLES

Example 1.

Various scale-inhibiting polymers were evaluated to compare their ability to prevent scale or mineral deposition. Descriptions of the polymers are provided in Table 1. Aqueous cyanide solutions that were supersaturated with calcium carbonate were used to simulate scaling conditions. A calcium carbonate scaling solution was prepared as described below. The scaling solutions were treated with various scale-inhibiting polymers in varying amounts.

Cation Solution: 2.92 g/l $CaCl_2 \cdot 2H_2O$; 0.47 g/l $MgCl_2 \cdot 6H_2O$; 3.3 g/l NaCl. Solution contains 2000 ppm $Ca^{2+}$ (as $CaCO_3$), 200 ppm $Mg^{2+}$ (as $CaCO_3$), and 2600 ppm $Cl^-$

Anion Solution: 3.85 g/l $Na_2SO_4$; 0.42 g/l $Na_2CO_3$, 1.14 g/l NaCN. Final pH adjusted to 11.2 with sodium hydroxide. Solution contains: 2600 ppm $SO_4^{2+}$, 400 ppm $CO_3^{2-}$ (as $CaCO_3$) and 600 ppm $CN^-$

Each polymer was added to the anion solution prior to combining the mixture with the cation solution. Accordingly, the final concentration of the chemical constituents in the combined solutions is one-half the value shown for the individual solutions.

Glass jars containing 100 mL of the supersaturated calcium carbonate solutions treated with various dosages (5, 15, and 30 ppm) of the polymers were incubated for 20 hours at 70°C under static conditions. The incubated solutions were allowed to cool to room temperature, filtered through a 0.2 $\mu$ syringe filter, and analyzed titrimetrically for soluble calcium using EDTA titrant. Percent $CaCO_3$ inhibition was determined using the formula (I) below:

$$\% \text{ inhibition} = (Ca_s - Ca_c)/(Ca_b - Ca_c) * 100 \qquad (I)$$

Where:

$Ca_s$ = calcium concentration in the sample

$Ca_c$ = calcium concentration in an untreated control

$Ca_b$ = calcium concentration in blank solution containing no carbonate

The results are shown in Table 1 below. Several commercially available scale-inhibiting polymers were used in comparative experiments (these samples are labeled Ref. X). All treatment solutions were prepared in deionized water using laboratory chemical salts.

| Product ID | Polymer Type | 5 ppm | 15 ppm | 30 ppm |
|---|---|---|---|---|
| A* | Sodium allyl sulfonate and maleic acid copolymer | 10.7 | 75.2 | 102.4 |
| B | Acrylic, maleic, sulfonic acid terpolymer | 24.7 | 58.8 | 67 |
| Ref. 1 | Polyacrylic acid (PAA) | -17.5 | 95.3 | 91.8 |
| Ref. 2 | PAA | 12.9 | 30.5 | 91.8 |
| Ref. 3 | Organo phosphonate | 11.7 | 69.3 | 85.8 |
| Ref. 4 | PAA | 27.1 | 49.4 | 84.7 |
| Ref. 5 | PAA | 12.9 | 51.8 | 70.4 |
| Ref. 6 | Organo phosphonate, acrylic acid | -1.2 | 63.6 | 63.3 |
| Ref. 7 | PAA | 42.3 | 35.2 | 42.2 |
| Ref. 8 | PAA | -0.1 | 22.3 | 28.2 |
| *Comparative example | | | | |

At 30 ppm, exemplary Sample A obtained 100% scale (CaCO3) inhibition. This sample outperformed any of the other commercially available products tested.

Example 2:

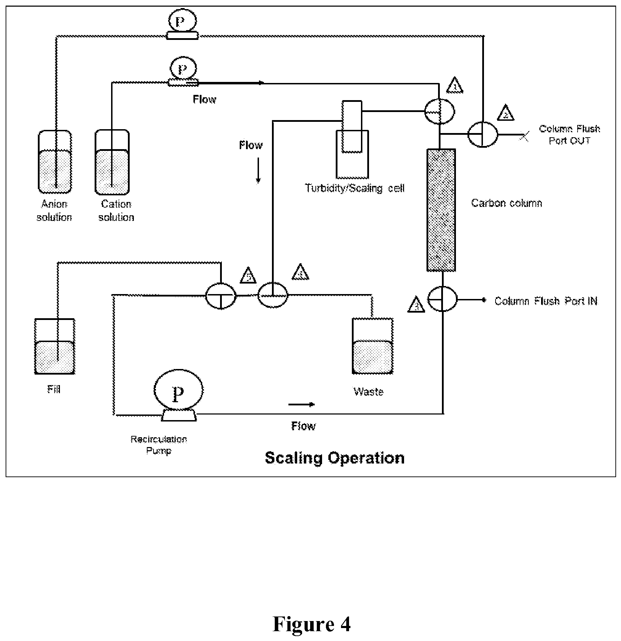

The ability of various scale-inhibiting polymers to prevent scale or mineral deposition directly onto activated carbon was evaluated under flowing conditions using a model carbon extraction circuit (see Figure 4). Descriptions of these polymers are provided in Table 2 below.

In the model circuit, anion and cation solutions were pumped individually into a 2 cm diameter by 10 cm column filled with activated carbon. The circulated water was steadily replenished to give a residence time of twenty minutes with an overall experiment length of 3.5 hours. At the end of the experiment, calcium carbonate on the carbon was dissolved with acid and the amount of dissolved calcium was measured. Lower amounts of dissolved calcium indicated better inhibition of calcium carbonate formation. In addition to the carbon column, the water circulated past an optical sensor that registered decreases in light intensity caused by calcium carbonate formation in solution and on the sensor surface.

Calcium carbonate scaling solutions were prepared from the following cation and anion solutions:

Cation Solution: 1.22 g/L CaCl2-2H2O; 0.2 g/L MgCl2-6H2O; 5.1 g/L NaCl. Solution contains 833 ppm Ca2+ (as $CaCO_3$), 83.3 ppm Mg2+ (as $CaCO_3$), and 3100 ppm Cl-

Anion Solution: 0.66 g/L Na2CO3, 2.7 g/L NaCN. Final pH adjusted 12.0 with sodium hydroxide. Solution contains: 625 ppm CO3 2- (as CaCO3) and 1200 ppm CN-

The polymers in Table 2 were added to the anion solution prior to being combined with the cation solution. The dosage was 15 ppm of the polymer. Product Samples C and D were exemplary of the embodiments described herein. Sample C was a terpolymer of acrylic acid, maleic acid, and a sulfonate-containing monomer. Sample D was a copolymer of a sulfonate-containing monomer and maleic acid. The measured amounts of dissolved calcium are reported in Table 2, below.

Table 2.

| Product ID | Polymer Type | mg CaCO3 deposit |
|---|---|---|
| Control | Untreated control | 110.4 |
| C | acrylic-maleic-sulfonate | 81.6 |
| D* | sulfonate-maleic | 81.9 |
| Ref. 9 | acryl ic | 89.1 |
| *Comparative example | | |

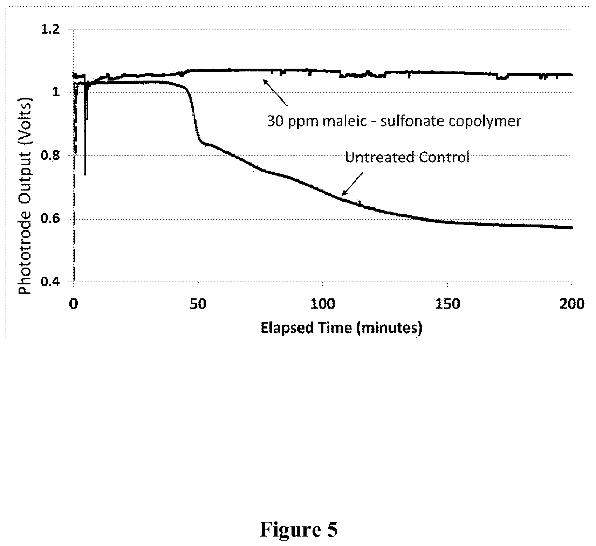

Figure 5 shows the light sensor response during the carbon extraction circuit test. As shown in the chart, there was a decrease in light intensity for untreated solution. In addition, the maleic-sulfonate copolymer (Sample D) at was observed to maintain full optical output indicating absence of $CaCO_3$ formation at 30 ppm.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Claims**

1. A method for preventing scale formation in circulating fluid, wherein the method comprises adding a scale-inhibiting polymer, or a composition comprising the scale-inhibiting polymer and a solvent, to the fluid; wherein the scale-inhibiting polymer comprises two or more recurring units wherein at least one recurring unit is a sulfonate-containing monomer selected from 2-sulfoethyl methacrylate and salts thereof; and at least one recurring unit is maleic acid; and wherein the fluid is an aqueous alkali cyanide solution.

2. The method of claim 1, wherein the circulating fluid is utilized in, or is a component of, a mining process.

3. The method of claim 2, wherein the mining process is a metal extraction process from raw mineral ore.

4. The method of claim 3, wherein the metal extracted by the metal extraction process is comprises gold, silver, mercury, nickel or copper.

5. The method of any one of claims 2-4, wherein the mining process is selected from the group consisting of: a process including heap leaching, vat leaching, activated carbon recovery, carbon adsorption, carbon-in-pulp (CIP), and carbon-in-leach (CIL), or combinations or portions thereof.

6. The method of any one of claims 2-4, wherein the mining process comprises a leaching step and the scale-inhibiting polymer is added to the process before or during the leaching step.

7. The method of any one of claims 2-4, wherein the mining process comprises a carbon adsorption step and the scale-inhibiting polymer is added to the process before or during the carbon adsorption step.

8. The method of claim 7, wherein the polymer is added to the fluid as a composition comprising the scale-inhibiting polymer and water.

9. The method of any one of claims 1-8, wherein the scale-inhibiting polymer consists essentially of recurring units 2-sulfoethyl methacrylate, maleic acid and acrylic acid.

**Patentansprüche**

1. Verfahren zum Verhindern von Kesselsteinbildung in zirkulierendem Fluid, wobei das Verfahren ein Zugeben eines kesselsteinhemmenden Polymers oder einer Zusammensetzung, die das kesselsteinhemmende Polymer und ein Lösungsmittel umfasst, zu dem Fluid umfasst;
wobei das kesselsteinhemmende Polymer zwei oder mehr wiederkehrende Einheiten umfasst, wobei es sich bei mindestens einer wiederkehrenden Einheit um ein sulfonathaltiges Monomer ausgewählt aus 2-Sulfoethylmethacrylat und Salzen davon handelt; und es sich bei mindestens einer wiederkehrenden Einheit um Maleinsäure handelt; und wobei das Fluid eine wässrige Alkalicyanidlösung ist.

2. Verfahren nach Anspruch 1, wobei das zirkulierende Fluid in einem Bergbauprozess eingesetzt wird oder ein Bestandteil davon ist

3. Verfahren nach Anspruch 2, wobei der Bergbauprozess ein Gewinnungsprozess von Metall aus einem Rohmineralerz ist.

4. Verfahren nach Anspruch 3, wobei das durch den Metallgewinnungsprozess gewonnene Metall Gold, Silber, Quecksilber, Nickel oder Kupfer umfasst.

5. Verfahren nach einem der Ansprüche 2 bis 4, wobei der Bergbauprozess ausgewählt ist aus der Gruppe bestehend aus: einem Prozess, der Haufenlaugung, Rührlaugung, Aktivkohlerückgewinnung, Kohlenstoffadsorption, Carbon-in-Pulp (CIP), Carbon-in-Leach (CIL) oder Kombinationen oder Anteile davon einschließt.

6. Verfahren nach einem der Ansprüche 2 bis 4, wobei der Bergbauprozess einen Laugungsschritt umfasst und das kesselsteinhemmende Polymer vor dem oder während des Laugungsschritts zu dem Prozess gegeben wird.

7. Verfahren nach einem der Ansprüche 2 bis 4, wobei der Bergbauprozess einen Kohlenstoffadsorptionsschritt umfasst und wobei das kesselsteinhemmende Polymer vor dem oder während des Kohlenstoffadsorptionsschritts zu dem Prozess gegeben wird.

8. Verfahren nach Anspruch 7, wobei das Polymer als Zusammensetzung, die das kesselsteinhemmende Polymer und Wasser umfasst, zu dem Fluid gegeben wird.

9. Verfahren nach einem der Ansprüche 1 bis 8, wobei das kesselsteinhemmende Polymer im Wesentlichen aus den wiederkehrenden Einheiten 2-Sulfoethylmethacrylat, Maleinsäure und Acrylsäure besteht.

**Revendications**

1. Procédé pour la prévention de la formation de tartre dans un fluide de circulation, le procédé comprenant l'ajout d'un polymère antitartre, ou d'une composition comprenant le polymère antitartre et un solvant, au fluide ;
le polymère antitartre comprenant deux motifs répétitifs ou plus, au moins un motif répétitif étant un monomère contenant sulfonate choisi parmi le méthacrylate de 2-sulfoéthyle et des sels correspondants ; et au moins un motif répétitif étant l'acide maléique ; et le fluide étant une solution aqueuse de cyanure d'alcali.

2. Procédé selon la revendication 1, le fluide de circulation étant utilisé dans, ou étant un composant de, un processus de minage.

3. Procédé selon la revendication 2, le processus de minage étant un processus d'extraction de métal à partir de minerai brut.

**4.** Procédé selon la revendication 3, le métal extrait par le processus d'extraction de métal comprenant l'or, l'argent, le mercure, le nickel ou le cuivre.

**5.** Procédé selon l'une quelconque des revendications 2 à 4, le processus de minage étant choisi dans le groupe constitué par : un processus comprenant la lixiviation en tas, la lixiviation en cuve, la récupération sur charbon actif, l'adsorption sur charbon, le charbon en pâte (CIP) et le charbon dans la lixiviation (CIL), ou des combinaisons ou des parties correspondantes.

**6.** Procédé selon l'une quelconque des revendications 2 à 4, le processus de minage comprenant une étape de lixiviation et le polymère antitartre étant ajouté au processus avant ou pendant l'étape de lixiviation.

**7.** Procédé selon l'une quelconque des revendications 2 à 4, le processus de minage comprenant une étape d'adsorption sur carbone et le polymère antitartre étant ajouté au processus avant ou pendant l'étape d'adsorption sur carbone.

**8.** Procédé selon la revendication 7, le polymère étant ajouté au fluide en tant que composition comprenant le polymère antitartre et de l'eau.

**9.** Procédé selon l'une quelconque des revendications 1 à 8, le polymère antitartre étant essentiellement constitué de motifs répétitifs de méthacrylate de 2-sulfoéthyle, d'acide maléique et d'acide acrylique.

**Figure 1**

**Figure 2**

Figure 3

**Figure 4**

**Figure 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61513092